# EUROPÄISCHE PATENTSCHRIFT

(11) **EP 1 480 733 B1**
(45) Veröffentlichungstag und Bekanntmachung des Hinweises auf die Patenterteilung: **04.01.2006**
(21) Anmeldenummer: 03742865.3
(22) Anmeldetag: 22.01.2003
(51) Int. Cl.: B01D 53/14, C01B 17/04, C10L 3/10

(54) **VERFAHREN ZUR ENTFERNUNG VON MERKAPTAN AUS ROHGAS**
METHOD FOR ELIMINATING MERCAPTAN FROM CRUDE GAS
PROCEDE D'ELIMINATION DU MERCAPTAN CONTENU DANS UN GAZ BRUT

(30) Priorität: 26.02.2002 DE 10208253
(43) Veröffentlichungstag der Anmeldung: 01.12.2004
(73) Patentinhaber: Lurgi AG, 60295 Frankfurt am Main (DE)
(72) Erfinder: HUDER, Karin, 60435 Frankfurt am Main (DE); WEISS, Max-Michael, 61440 Oberursel (DE)
(86) Internationale Anmeldenummer: PCT/EP2003/000582
(87) Internationale Veröffentlichungsnummer: WO 2003/072225

(56) Entgegenhaltungen:
- WO-A-97/26069
- WO-A-97/26070
- US-A- 3 989 811
- US-A- 4 372 925
- US-A- 4 552 572

## Beschreibung

Die Erfindung betrifft ein Verfahren zur Reinigung von Gas, insbesondere von kohlenwasserstoffhaltigem Gas wie z.B. Erdgas, das verunreinigt ist mit Schwefel in der Form von H₂S und Merkaptan sowie CO₂.

In der Schrift WO 97/26069 wird ein Verfahren zur Reinigung von Kohlendioxid und schwefelhaltigen Gasen beschrieben, bei dem schwefelbehaftete Verunreinigungen in Form von Merkaptanen und H₂S vorliegen. In einer ersten Absorption werden die schwefelbehafteten Verunreinigungen aus dem Gas entfernt, um einen Reingastrom und einen Sauergasstrom zu erzeugen, wobei das Sauergas hydriert wird um einen größeren Anteil an Merkaptanen zu H₂S umzuwandeln. Das hydrierte Sauergas wird in eine zweite Absorptions/Regenerationsanlage eingeleitet, in dem das Sauergas in einen H₂S-reichen ersten Gasstrom separiert wird, der in eine Claus-Anlage eingeleitet wird, und einen zweiten H₂S-armen Gasstrom, welcher zur Nachverbrennung geführt wird. Der Claus-Anlage folgt eine Tailgas-Nachbehandlung, in der das H₂S weiter reduziert wird und ein H₂S-reiches Gas abgezogen wird.

Nachteilig an diesem Verfahren ist die zu geringe Menge an Schwefel und Merkaptanen, die aus dem Gas entfernt werden kann. Nach dem Stand der Technik ist es nur mit großem Aufwand möglich, den Schwefel zu mehr als 95 Gew. % aus dem Rohgas zu entfernen.

Der Erfindung liegt die Aufgabe zugrunde, ein verbessertes Verfahren zur Reinigung von kohlenwasserstoffhaltigem Gas zu schaffen, bei dem die unerwünschten schwefelhaltigen Stoffe in der Form von H₂S und Merkaptan entfernt werden.

Erfindungsgemäß wird die Aufgabe dadurch gelöst, dass Rohgas in eine Absorptions- und Regenerationskolonne geleitet und dort gewaschen wird, wobei aus dieser Absorptions- und Regenerationskolonne drei Gasströme abgezogen werden, wobei ein erster Abgasstrom in eine Claus-Anlage geleitet wird, ein zweiter Sauergasstrom mit niedriger H₂S-Konzentration von 10 - 30 Vol-% in eine weitere Absorptionsanlage geleitet wird, und ein dritter Gasstrom, das Wertgas mit den Merkaptanen, gekühlt und einer Adsorptionsanlage zugeführt wird, dass aus dieser Adsorptionsanlage ein Sweetgas abgezogen und ein merkaptanhaltiger Gasstrom einer Wäsche unterzogen wird. Bevorzugt wird als Wäsche eine physikalische Wäsche, z.B. eine Purisol-Anlage, eingesetzt, mit der eine kleine Menge Gas mit hoher Merkaptankonzentration in die Claus-Anlage eingeleitet wird und ein Teil des koadsorbierten Wertgases aus der Regeneration der Adsorptionsanlage als Fuel-Gas wiedergewonnen wird. In der Claus-Anlage wird das Merkaptangas vollständig verbrannt.
Dadurch, dass der zweite Sauergasstrom vor der Einleitung in die Claus-Anlage erst in einer Absorption aufgestärkt und die Lösung in einer Aufstärkungswäsche regeneriert wird, kann die Claus-Anlage kleiner ausgeführt werden, da der Sauergasstrom eine höhere Konzentration an H₂S aufweist. Die Verarbeitung von aufkonzentriertem H₂S-haltigem Gas und dem Merkaptanstrom in der Claus-Anlage sowie die Verarbeitung des Gasstroms aus der ersten Absorption und des Claus-Abgases in einer Tailgaswäsche, erhöht den Schwefelrückgewinnungsgrad der gesamten Anlage.
Damit die Absorptionsanlage für das aufzustärkende Sauergas weniger Lauge verbraucht und nur eine Regenerationskolonne benötigt wird, wird aus der Absorptionsanlage, die nach der Hydrierung des Clausrestgases angeordnet ist, die H₂S-haltige Lösung abgezogen und in die Absorptionsanlage für die Aufstärkung des Sauergases eingeleitet.

Der Schwefelrückgewinnungsgrad wird dadurch erhöht, dass das Gas aus der Absorption der Aufstärkung in die Hydrierung geleitet wird, um Schwefel-Komponenten in H₂S umzuwandeln, und danach in die Absorption der Tailgas-Nachbehandlung geleitet wird.

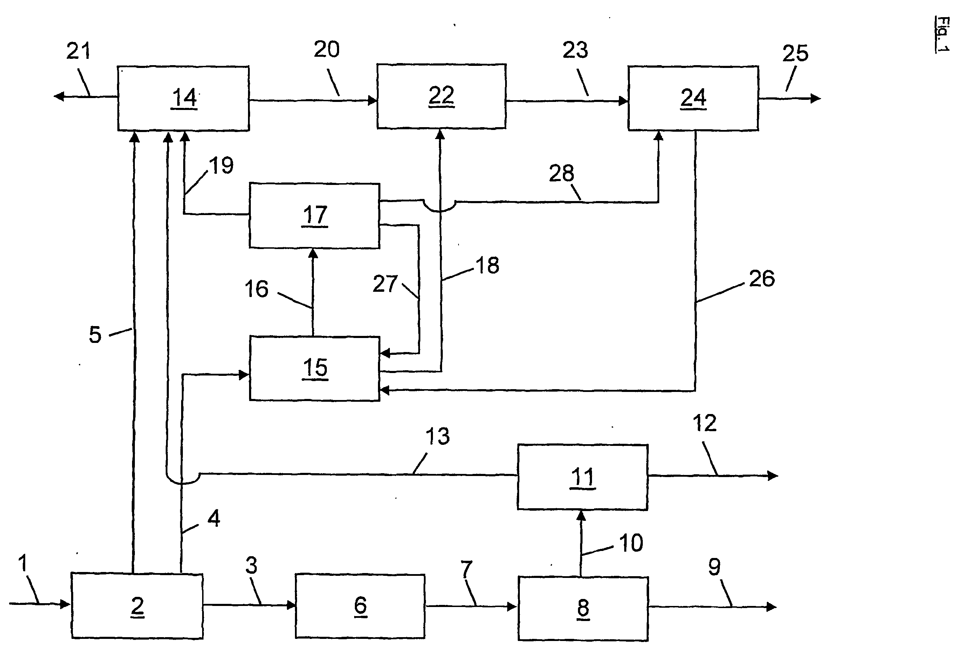

Ausgestaltungsmöglichkeiten des Verfahrens werden mit Hilfe der Zeichnung beispielhaft erläutert.
Rohgas wird über Leitung (1) in eine erste Wäsche bestehend aus einer Absorptions- und einer Regenerationskolonne (2) geleitet und dort gewaschen. Ein erster Abgasstrom (5) aus der Regeneration wird direkt in eine Clausanlage (14) geleitet. Dieser Abgasstrom (5) besteht hauptsächlich aus bis zu 80 Vol.-% Kohlenwasserstoff und bis zu 20 Vol.-% aus CO₂ mit geringen Mengen an Merkaptanen (bis zu 0,3 Vol.-%) und H₂S (bis zu 5 Vol.-%).
Ein zweiter Sauergasstrom (4) mit niedriger H₂S-Konzentration mit bis zu 30 Vol-% H₂S wird in eine weitere Absorptionsanlage (15) geleitet und dort mit einem nicht beladenem Lösungsmittel aus Leitung (26) und (27) aufgestärkt. Aus der Absorptionsanlage (15) wird das mit H₂S beladene Lösungsmittel (16) in eine Regenerationsanlage (17) eingeleitet. Das Gas (bis zu 97 Vol.-% CO₂ und 0,2 Vol.-% Merkaptan) aus der Absorptionsanlage (15) wird über Leitung (18) einer Hydrierung (22) zugeführt.
Aus der Regeneration (17) wird Sauergas mit hoher H₂S-Konzentration von bis zu 60 Vol.-% H₂S über Leitung (19) in die Clausanlage (14) geleitet.
Aus der Absorptions- und Regenerationskolonne (2) wird ein dritter Gasstrom (3), das Wertgas mit dem größten Anteil der Merkaptane abgezogen, gekühlt (6) und über Leitung (7) einer Adsorption (8) zugeführt. Aus dieser Adsorption (8) wird das Wertgas über Leitung (9) weiteren Verfahren, z.B. einer Verflüssigung, zugeführt. Der merkaptanhaltige Gasstrom (10) wird einer physikalischen Wäsche unterzogen, aus der über Leitung (12) das koadsorbierte Wertgas als Fuel-Gas zurückgewonnen wird, und über Leitung (13) das hoch konzentrierte Merkaptangas der Claus-Anlage (14) zugeführt wird. Der Merkaptanstrom wird in der Regeneration des Purisol-Lösungsmittels gewonnen. Die Menge ist zwar klein, aber mit einer sehr hohen Merkaptan-Konzentration von 10 Vol.-% bis 60 Vol.-%. Alternativ zur Purisol-Anlage (11) ist eine andere physikalische oder physikalisch/chemische Wäsche möglich. Diese haben aber den Nachteil, dass zuviel CH₄ absorbiert wird. In der Claus-Anlage (14) wird das Merkaptan vollständig verbrannt. Das daraus entstehende SO₂ wird mit dem H₂S aus dem Sauergas der Leitung (19) zu Schwefel umgesetzt. Der anfallende flüssige Schwefel wird über Leitung (21) abgezogen und einer weiteren Verwertung zugeführt. Damit wird ein hoher Schwefelrückgewinnungsgrad erreicht. Bei der Claus-Anlage (14) handelt es sich um eine an sich bekannte Anlage, die aus einem Verbrennungsofen sowie mehreren katalytischen Reaktoren zur Durchführung der Reaktion besteht. In der Claus-Anlage (14) fällt immer ein sogenanntes Clausrestgas an, das neben nicht kondensiertem Elementarschwefel nicht umgesetztes Schwefeldioxid und H₂S enthält. Dieses Restgas wird über Leitung (20) abgezogen und wird einer Nachbehandlung unterzogen, um den Schwefelrückgewinnungsgrad zu erhöhen. Das Claus-Restgas wird über Leitung (20) einer Hydrier-Anlage (22) zugeführt, die auch mit dem Gas über Leitung (18) aus der Absorptionsanlage (15) versorgt wird. In der Hydrierung wird SO₂ zu H₂S umgewandelt und über Leitung (23) einer Absorptionsanlage (24) zugeführt. Aus der Absorptionsanlage (24) wird eine Lösung über Leitung (26) in die Aufstärkungsabsorption (15) zur weiteren Absorption von H₂S gegeben. Das verbleibende H₂S-haltige Gas wird über Leitung (25) aus der Absorptionsanlage (24) abgezogen und einer Verbrennung zugeführt.

### Beispiel:

Die folgende Tabelle zeigt eine Analyse der Gasströme in den einzelnen Leitungen. Die flüssigen Prozess-Ströme in den Leitungen (16), (26), (27) und (28) sind nicht dargestellt.

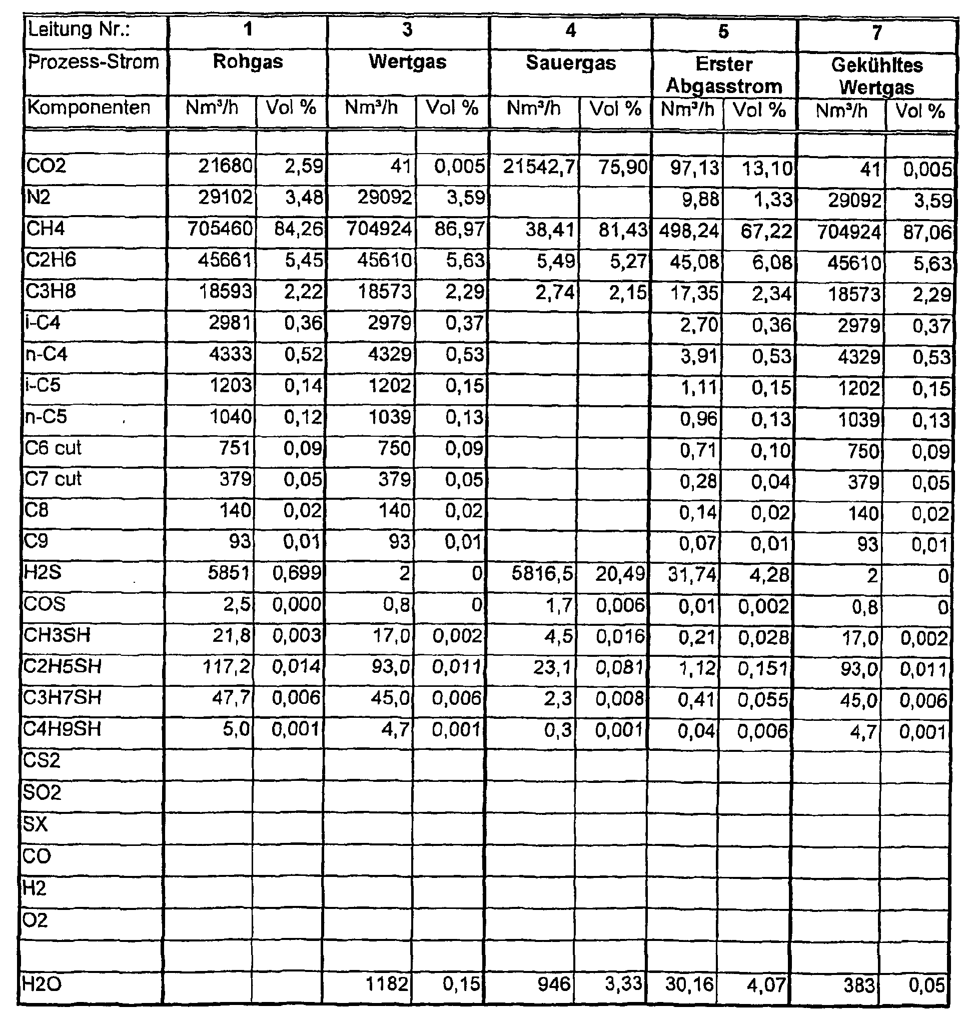

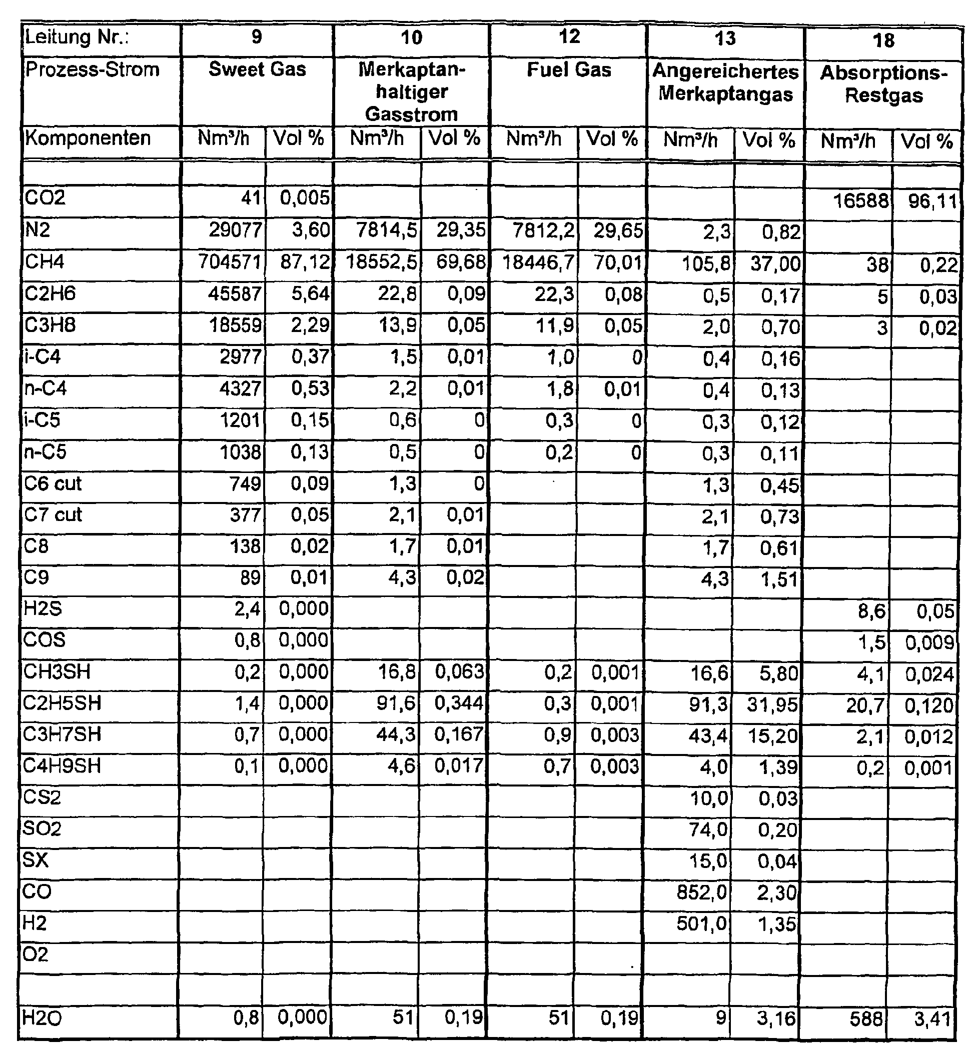

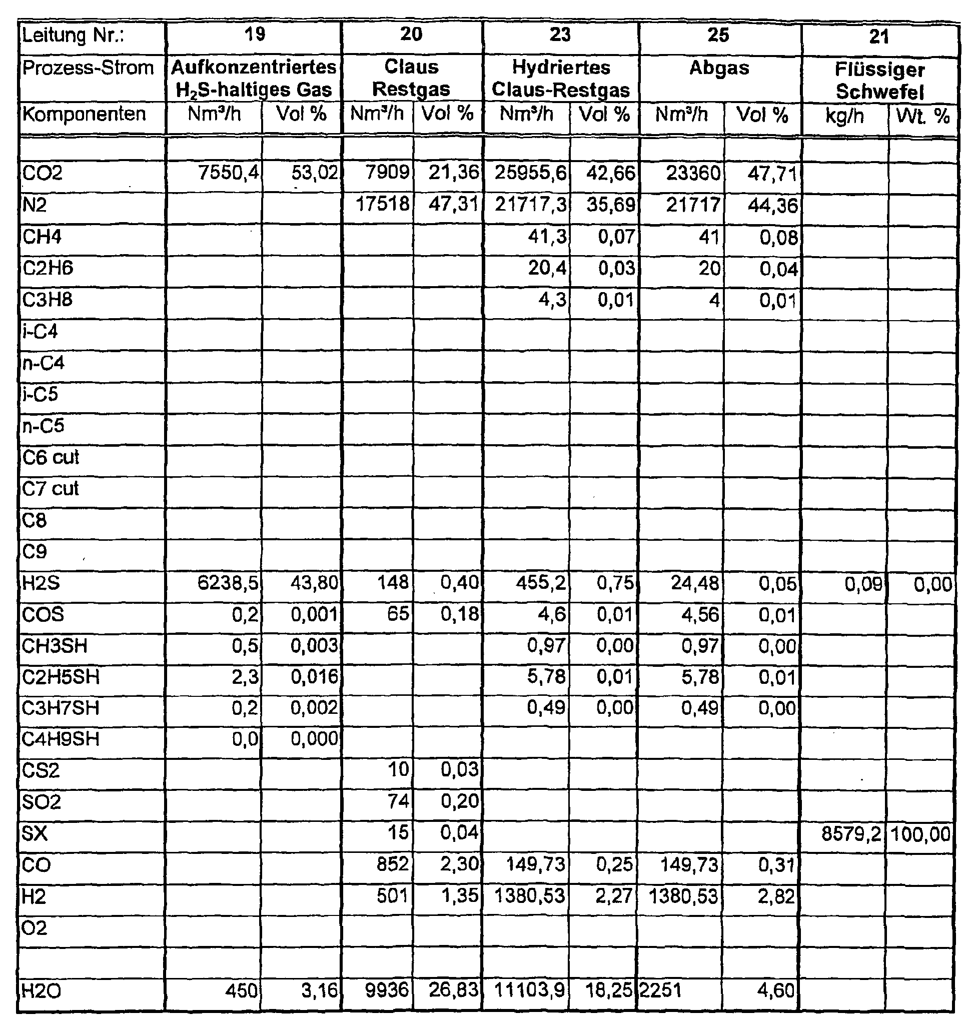

Entsprechend den in der Tabelle dargestellten Werten wird Rohgas über Leitung (1) in eine Absorptions- und Regenerationskolonne (2) geleitet und dort gewaschen. Der erste Abgasstrom (5) aus der Regeneration, der aus ca. 76 Vol.-% Kohlenwasserstoff und aus ca. 13 Vol.-% CO₂ mit geringen Mengen an Merkaptanen und H₂S besteht, wird direkt in eine Clausanlage (14) geleitet.
Ein zweiter Sauergasstrom (4) mit niedriger H₂S-Konzentration (20,5 Vol-%) wird in eine Absorptionsanlage (15) geleitet und dort mit einem nicht bzw. kaum beladenem Lösungsmittel aus Leitung (26) und (27) aufgestärkt. Aus der Absorptionsanlage (15) wird das mit H₂S beladene Lösungsmittel (16) in eine Regenerationsanlage (17) eingeleitet. Das Gas mit rund 96 Vol.-% CO₂ und 0,2 Vol.-% Merkaptan aus der Absorptionsanlage (15) wird über Leitung (18) einer Hydrierung (22) zugeführt. Aus der Regeneration (17) wird Sauergas mit hoher H₂S-Konzentration (43,8 Vol.-%) über Leitung (19) in die Clausanlage (14) geleitet.
Aus der Absorptions- und Regenerationskolonne (2) wird ein dritter Gasstrom (3) mit einem Merkaptananteil von rund 0,01 Vol-% abgezogen, gekühlt (6) und über Leitung (7) einer Adsorption (8) zugeführt. Aus dieser Adsorption (8) wird das Wertgas über Leitung (9) weiteren Verfahren, z.B. einer Verflüssigung, zugeführt. Der merkaptanhaltige Gasstrom wird einer physikalischen Wäsche unterzogen, aus der über Leitung (12) ein Teil des Wertgases als Fuel-Gas zurückgewonnen wird, und über Leitung (13) das hoch konzentrierte Merkaptangas der Claus-Anlage (14) zugeführt wird. Der Merkaptanstrom wird in der Regeneration des Purisol-Lösungsmittels gewonnen. Die Menge ist zwar klein, aber mit einer sehr hohen Merkaptan-Konzentration von rund 54 Vol.-%. In der Claus-Anlage (14) wird das Merkaptan vollständig verbrannt. Das daraus entstehende SO₂ wird mit dem H₂S aus dem Sauergas der Leitung (19) zu Schwefel umgesetzt. Der anfallende flüssige Schwefel wird über Leitung (21) abgezogen und einer weiteren Verwertung zugeführt. Das Restgas der Claus-Anlage besteht hauptsächlich aus den Bestandteilen CO₂, N₂ und H₂O und wird über Leitung (20) abgezogen.

## Patentansprüche

1. Verfahren zur Entfernung von Merkaptan aus Rohgas, bei dem Rohgas in eine Absorptions- und Regenerationskolonne (2) geleitet und dort gewaschen wird, wobei aus dieser Absorptions- und Regenerationskolonne (2) drei Gasströme (3, 4, 5) abgezogen werden, wobei ein erster Abgasstrom (5) in eine Claus-Anlage (14) geleitet wird, ein zweiter Gasstrom (4) mit einer H₂S-Konzentration von bis zu 30 Vol-% in eine weitere Absorptionsanlage (15) geleitet wird, **dadurch gekennzeichnet, dass** ein dritter Gasstrom (3), das Wertgas mit den Merkaptanen, gekühlt (6) und einer Adsorptionsanlage (8) zugeführt wird, dass aus dieser Adsorptionsanlage (8) das gereinigte Wertgas (9) abgezogen und ein merkaptanhaltiger Gasstrom (10) einer Wäsche (11) unterzogen wird und dass dieses konzentrierte merkaptanhaltige Gas (13) der Claus-Anlage (14) zugeführt wird.

2. Verfahren nach Anspruch 1, **dadurch gekennzeichnet, dass** die Wäsche (11) eine physikalische Wäsche ist.

3. Verfahren nach Anspruch 1, **dadurch gekennzeichnet, dass** der zweite Gasstrom (4) in einer Absorptionsanlage (15) aufgestärkt, die daraus entstehende Lösung (16) einer Regeneration (17) zugeführt wird und das daraus entstehende, mit H₂S-aufkonzentrierte Gas (19) der Claus-Anlage (14) zugeführt wird.

4. Verfahren nach Anspruch 1, **dadurch gekennzeichnet, dass** aus der Absorptionsanlage (24), die nach der Hydrierung (22) des Clausrestgases (20) angeordnet ist, die H₂S-haltige Lösung (26) abgezogen und in die Absorptionsanlage (15) für das Sauergas eingeleitet.

5. Verfahren nach Anspruch 1, **dadurch gekennzeichnet, dass** das Gas aus der Absorption der Aufstärkung (15) in die Hydrierung (22) und danach in die Absorptionsanlage (24) geleitet wird.

## Claims

1. A process of removing mercaptan from crude gas, in which crude gas is introduced into an absorption and regeneration column (2) and washed therein, three gas streams (3, 4, 5) being withdrawn from this absorption and regeneration column (2), a first exhaust gas stream (5) being introduced into a Claus plant (14), a second gas stream (4) with a H₂S concentration of up to 30 vol-% being introduced into another absorption plant (15), **characterized in that** a third gas stream (3), the valuable gas with the mercaptans, is cooled (6) and supplied to an adsorption plant (8), that from this adsorption plant (8) the cleaned valuable gas (9) is withdrawn, and a mercaptan-containing gas stream (10) is subjected to a washing stage (11), and that this concentrated mercaptan-containing gas (13) is supplied to the Claus plant (14).

2. The process as claimed in claim 1, **characterized in that** the washing stage (11) is a physical washing stage.

3. The process as claimed in claim 1, **characterized in that** the second gas stream (4) is fortified in an absorption plant (15), the resulting solution (16) is supplied to a regeneration (17), and the resulting gas (19) concentrated with H₂S is supplied to the Claus plant (14).

4. The process as claimed in claim 1, **characterized in that** from the absorption plant (24), which is disposed behind the hydrogenation (22) of the residual Claus gas (20), the H₂S-containing solution (26) is withdrawn and introduced into the absorption plant (15) for the sour gas.

5. The process as claimed in claim 1, **characterized in that** the gas from the absorption of the fortification (15) is introduced into the hydrogenation (22) and then into the absorption plant (24).

## Revendications

1. Procédé d'élimination de mercaptan de gaz brut, dans lequel on envoie du gaz brut dans une colonne (2) d'absorption et de régénération et on l'y lave en soutirant de cette colonne (2) d'absorption et de régénération trois courants (3, 4, 5) gazeux, un premier courant (5) gazeux sortant étant envoyé dans une installation (14) de Claus, un deuxième courant (4) gazeux sortant ayant une concentration H₂S allant jusqu'à 30% en volume étant envoyé dans une autre installation (15) d'absorption, **caractérisé en ce que** l'on refroidit (6) un troisième courant (3) gazeux, le gaz de valeur ayant les mercaptans, et on l'envoi à une installation (8) d'adsorption, on soutire de cette installation (8) d'adsorption le gaz (9) de valeur épuré et on soumet un courant (10) gazeux contenant des mercaptans à un lavage (11) et on envoi ce gaz (13) concentré contenant des mercaptans à l'installation (14) de Claus.

2. Procédé suivant la revendication 1, **caractérisé en ce que** le lavage (11) est un lavage physique.

3. Procédé suivant la revendication 1, **caractérisé en ce que** l'on concentre le deuxième courant (4) gazeux dans une installation (15) d'absorption, on envoie la solution (16) qui s'y forme à une régénération (17) et on envoie le gaz (19) concentré en H₂S, qui s'y forme à l'installation (14) de Claus.

4. Procédé suivant la revendication 1, **caractérisé en ce que** l'on soutire de l'installation (24) d'absorption après une hydruration (22) du gaz (20) résiduel de Claus, la solution contenant du H₂S et on l'envoie dans l'installation (15) d'absorption.

5. Procédé suivant la revendication 1, **caractérisé en ce qu'**on envoie le gaz, sortant de l'absorption, de la concentration (15) à l'hydruration (22) et ensuite à l'installation (24) d'absorption.
